# EUROPÄISCHE PATENTSCHRIFT

(11) **EP 3 760 031 B1**
(45) Veröffentlichungstag und Bekanntmachung des Hinweises auf die Patenterteilung: **26.07.2023**
(21) Anmeldenummer: 20181671.7
(22) Anmeldetag: 23.06.2020
(51) Int. Cl.: A01F 15/08

(54) **RUNDBALLENPRESSE UND VERFAHREN ZUM BETRIEB EINER RUNDBALLENPRESSE**
AGRICULTURAL BALER AND METHOD FOR OPERATING SAME
PRESSE À BALLES RONDES ET PROCÉDÉ DE FONCTIONNEMENT D'UNE PRESSE À BALLES RONDES

(30) Priorität: 27.06.2019 DE 102019209345
(43) Veröffentlichungstag der Anmeldung: 06.01.2021
(73) Patentinhaber: Deere & Company, Moline, IL 61265 (US)
(72) Erfinder: Lebeau, Jonathan, 68163 Mannheim (DE); Gresset, Pascal, 68163 Mannheim (DE); Perrotin, Frederic, 68163 Mannheim (DE)
(74) Vertreter: Stein, Stefan

(56) Entgegenhaltungen:
- EP-A1- 1 266 563
- EP-A1- 1 508 268
- EP-A1- 1 889 534
- EP-A1- 3 162 187
- EP-A1- 3 162 188
- EP-A1- 3 165 079

## Beschreibung

Die Erfindung betrifft eine Rundballenpresse gemäss dem Oberbegriff des unabhängigen Anspruchs 1 und ein Verfahren für eine Rundballenpresse gemäss dem Oberbegriff des unabhängigen Anspruchs 8.

Rundballenpressen sind bekannt. In Rundballenpressen wird landwirtschaftliches Erntegut, beispielsweise Stroh, Gras oder Getreide zu einem Rundballen geformt und mit einem Umwicklungsmaterial, beispielsweise Netz, Folie oder Bindegarn, umwickelt. Derartige Rundballenpressen weisen eine Aufnahme- und Zuführeinrichtung für das zu pressende Erntegut auf, durch welche das Erntegut in eine Zuführöffnung einer Presskammer eingeführt wird. Die Rundballenpresse umfasst ein Gehäuse, wobei das Gehäuse insbesondere zweigeteilt ausgebildet sein kann. Das Gehäuse weist einen Gehäuseteil und eine an diesem Gehäuseteil um eine Lagerachse schwenkbar gelagerte Auswurfklappe auf. Im Speziellen befindet sich am rückwärtigen oberen Eckbereich des Gehäuseteils ein Lager, an welchem die Auswurfklappe schwenkbar gelagert sein kann.

Die Presskammer umfasst eines oder mehrere Pressmittel, die auf oder an dem Gehäuseteil und der Auswurfklappe verteilt sind und die Presskammer umfangsseitig begrenzen. Somit bildet das Gehäuseteil einen vorderen Teil der Presskammer und die Auswurfklappe einen hinteren Teil der Presskammer aus. Mittels des Pressmittels ist eine Eingriffswirkung, insbesondere eine rotationserzeugende oder rotationserhaltende Eingriffswirkung, auf einen in der Presskammer befindlichen Rundballen erzeugbar. Die Auswurfklappe ist mittels einer ersten Stelleinrichtung derart schwenkbar, dass beim Öffnen der Auswurfklappe eine Auswurföffnung zwischen dem Gehäuseteil und der Auswurfklappe ausbildbar ist. Darüber hinaus ist mittels der ersten Stelleinrichtung eine Abmessung der Auswurföffnung verstellbar, insbesondere einstellbar und/oder veränderbar.

Die EP 3 162 188 A1 offenbart eine Rundballenpresse mit eine Auswurfklappe, die eine den Pressmitteln vorgelagerte, frei drehbar gelagerte Stützwalze aufweist. Die

EP 3 162 187 A1 offenbart eine Rundballenpresse, bei der das eine Auswurföffnung begrenzende Pressmittel der Auswurfklappe über eine Schaltkupplung vom Antrieb abkoppelbar ist. Sowohl die frei drehbar gelagerte Stützwalze, als auch das abgekoppelte und somit frei drehbare Pressmittel sind dazu da, um den Rundballen beim Auswerfen mit der Auswurfklappe zu halten bzw. zu stützen und/oder zu bremsen und eine Beschädigung des Umwicklungsmaterials zu verhindern. Die EP 1 508 268 A1 offenbart eine Rundballenpresse mit Mittel, welche den Rundballen gegen ein Abrollen auf einer Wägeplattform bremsen und/oder festhalten und nach Abschluss der Wägung in Abrollrichtung freigeben. Die EP 1 266 563 A1 offenbart eine Rundballenpresse mit Entladerampen mit Rollen am freien Ende.

Ein wesentliches Problem der bekannten Rundballenpressen ist, dass der Rundballen beim Entladen mit der Auswurfklappe gehalten und/oder gebremst wird, wodurch der Rundballen beispielsweise gegen das Gehäuseteil gedrückt wird. Dadurch kann das Umwicklungsmaterial eines mit einem Umwicklungsmaterial umwickelten Rundballen vom Gehäuseteil, insbesondere den begrenzende Pressmitteln beschädigt werden. Im Weiteren sind die bekannten Rundballenpressen konstruktiv zu kompliziert ausgestaltet bzw. ausgelegt, sodass Bauteile der Auswurfklappe aufgrund der wirkenden Kräfte stark beansprucht werden, beispielsweise das Lager der Auswurfklappe oder die Stützwalze. Darüber hinaus muss die Führung der Halterolle zusätzlich mit der Bewegung bzw. Einstellung der Auswurfklappe koordiniert werden, was verfahrenstechnisch sehr aufwändig ist.

Ausgehend von diesem Stand der Technik ist es daher eine Aufgabe der vorliegenden Erfindung eine Rundballenpresse und ein Verfahren zum Betrieb einer Rundballenpresse vorzuschlagen, die die aus dem Stand der Technik bekannten Nachteile weitgehend vermeiden, insbesondere eine Rundballenpresse und ein Verfahren zum Betrieb einer Rundballenpresse vorzuschlagen, die konstruktiv und/oder verfahrenstechnisch einfach ausgestaltet sind und/oder eine Beschädigung des Rundballens beim Entladen vermeiden.

Diese Aufgabe wird durch eine Rundballenpresse mit den Merkmalen des Anspruchs 1 und ein Verfahren zum Betreiben einer Rundballenpresse mit den Merkmalen des Anspruchs 8 gelöst.

Die abhängigen Ansprüche beziehen sich auf besonders vorteilhafte Ausführungsformen der Erfindung.

Erfindungsgemäß wird eine Rundballenpresse, mit einem Gehäuse vorgeschlagen. Das Gehäuse weist einen Gehäuseteil und eine an diesem Gehäuseteil um eine Lagerachse, insbesondere obere Anlenkachse, schwenkbar gelagerte Auswurfklappe auf. Auf dem Gehäuseteil und der Auswurfklappe sind Pressmittel, insbesondere antreibbare Pressmittel, verteilt, die eine Presskammer umfangsseitig begrenzen. Die Auswurfklappe ist mittels einer ersten Stelleinrichtung derart verstellbar, insbesondere einstellbar und/oder schwenkbar, dass beim Öffnen der Auswurfklappe eine Auswurföffnung zwischen dem Gehäuseteil und der Auswurfklappe ausbildbar ist und eine Abmessung der Auswurföffnung verstellbar, insbesondere einstellbar und/oder veränderbar ist. Das Gehäuseteil umfasst weiter eine Halterolle. Die Halterolle ist zwischen einer Ruhestellung und einer Arbeitsstellung verstellbar angeordnet, insbesondere einstellbar und/oder bewegbar und/oder verlagerbar oder abkoppelbar angeordnet. In der Arbeitsstellung nimmt die Halterolle eine die Auswurföffnung, bevorzugt für den Rundballen, besonders bevorzugt für den mit Umwicklungsmaterial umwickelten Rundballen, begrenzende Position ein.

Die Rundballenpresse kann eine größenunveränderliche Presskammer umfassen. Hierbei kann das Pressmittel als Pressrolle ausgebildet sein, insbesondere eine Vielzahl zueinander parallel verlaufender Pressrollen zum Pressen des Ernteguts. Die Rotationsachsen der Pressrollen können bei geschlossener Auswurfklappe auf einem Kreisbogen liegen und wenigstens eine der Pressrollen kann angetrieben sein. Die Anordnung der Pressrollen im Ballenpressraum kann einer Zylinderform entsprechen, sodass die Pressrollen zylindrisch um den Rundballen angeordnet sind und eine zylindrische Umfangsfläche ausbilden. Alternativ kann die Rundballenpresse, auch mit einer größenveränderlichen Presskammer bzw. als Rundballenpresse mit variabler Presskammer ausgebildet sein, wobei die Pressmittel dann als Riemen, Gurte oder Kettenanordnungen ausgebildet sein können. Der Entladevorgang kann mit dem Öffnen der Auswurfklappe beginnen und mit dem Schliessen der Auswurfklappe, nach dem Entladen und Halten des fertig gepressten Rundballens, enden.

Die erste Stelleinrichtung kann als ein Hubzylinder oder ein Schwenkzylinder ausgebildet sein. Der Hubzylinder oder Schwenkzylinder können beispielsweise elektrisch, mechanisch oder pneumatisch betätigbar sein, insbesondere als hydraulischer oder pneumatischer Hubzylinder oder Schwenkzylinder ausgebildet sein. Die erste Stelleinrichtung kann auch als Elektromotor, beispielsweise Spindelmotor oder Stellmotor, ausgebildet sein. Auch eine entsprechende Anordnung mit einem Seilzug ist denkbar, um die Betätigung rein mechanisch zu gestalten.

Die Abmessung der Auswurföffnung kann ein Durchmesser der Auswurföffnung oder ein Abstand zwischen den die Auswurföffnung begrenzenden Pressmitteln des Gehäuseteils und der Auswurfklappe sein. Die Rundballenpresse, bevorzugt das Gehäuse, besonders bevorzugt das Gehäuseteil, kann einen Rahmen und/oder ein Fahrgestell umfassen. Das Gehäuse, bevorzugt das Gehäuseteil, kann an dem Rahmen und/oder dem Fahrgestell angeordnet, insbesondere mit dem Rahmen und/oder dem Fahrgestell verbunden und/oder am diesem befestigt sein. Im Speziellen kann es sich um ein fahrgestellfestes Gehäuseteil handeln. Die Rundballenpresse kann eine Umwicklungseinrichtung zum Umwickeln des Rundballens mit einem Umwicklungsmaterial umfassen. Die Rundballenpresse kann eine Entladerampe umfassen.

In der Ruhestellung kann die Auswurfklappe geschlossen sein. Die Halterolle kann beim Öffnen der Auswurfklappe eine die Auswurföffnung begrenzende Arbeitsstellung einnehmen. Die Halterolle kann in der Ruhestellung keine die Auswurföffnung begrenzende Position einnehmen. Unter einer die Auswurföffnung begrenzende Position kann verstanden werden, dass die Halterolle in der Arbeitsstellung in die Auswurföffnung hineinragt. Die Halterolle kann somit in der Arbeitsstellung zumindest teilweise oder aber auch vollständig dem die Auswurföffnung begrenzenden Pressmittel des Gehäuseteils nachgelagert und dem die Auswurföffnung begrenzenden Pressmittel der Auswurfklappe vorgelagert sein und/oder zwischen diesen beiden Pressmitteln angeordnet sein. Im Speziellen kann die Halterolle bei geschlossener Auswurfklappe aus einer Ruhestellung in eine die Auswurföffnung für den umwickelten Rundballen beim Öffnen der Auswurfklappe begrenzende Arbeitsstellung verstellbar, insbesondere einstellbar und/oder bewegbar und/oder und/oder verlagerbar oder abkoppelbar, angeordnet sein. Die Halterolle kann in die Ruhestellung und die Arbeitsstellung einstellbar sein und/oder die Halterolle kann zwischen der Ruhestellung und der Arbeitsstellung verstellbar, insbesondere bewegbar sein. Die Halterolle kann also in der Arbeitsstellung die Abmessung der Auswurföffnung verkleinern. Beim Schließen der Auswurfklappe kann die Halterolle aus der Arbeitsstellung wieder in die Ruhestellung verlagert werden, sodass die Presskammer bei geschlossener Auswurfklappe eine über die Pressmittel durchgehende Begrenzung aufweist. Die Halterolle kann unmittelbar an der Auswurföffnung angeordnet sein, insbesondere unmittelbar an dem die Auswurföffnung angrenzenden Pressmittel des Gehäuseteils angeordnet sein. Die Halterolle kann ein Pressmittel, insbesondere eine Pressrolle sein. Die Halterolle kann beispielsweise das die Auswurföffnung begrenzende Pressmittel, insbesondere eine Pressrolle, des Gehäuseteils sein. Im Speziellen kann die Halterolle das unmittelbar an die Auswurföffnung angrenzende Pressmittel sein, das am Gehäuseteils angeordnet ist. Die Halterolle kann aber auch, bevorzugt in der Arbeitsstellung, den Pressmitteln nachgelagerte sein, insbesondere dem unmittelbar an die Auswurföffnung angrenzenden Pressmittel, das am Gehäuseteils angeordnet ist, nachgelagert sein. Mit anderen Worten, die Halterolle kann derart am Gehäuseteil angeordnet sein, dass in der Ruhestellung das unmittelbar an die Auswurföffnung angrenzenden Pressmittel des Gehäuseteils die Auswurföffnung begrenzt und in der Arbeitsstellung die Halterolle die Auswurföffnung begrenzt. Die Halterolle kann eine frei drehbar gelagerte Rolle, insbesondere ein frei drehbar gelagertes Pressmittel sein. Die Halterolle kann an einem Halterollenlager frei drehbar gelagert sein. Die Halterolle kann zum Halten/Stützen des Rundballens ausgebildet sein. Die Halterolle kann am Rahmen und/oder am Fahrgestell und/oder an der Entladerampe und/oder am Gehäuseteil angeordnet, bevorzugt befestigt und/oder schwenkbar gelagert sein. Ebenso kann die Halterolle als ein Teil der Entladerampe ausgebildet sein.

Wesentlich für die Erfindung ist, dass aufgrund der Anordnung der Halterolle am Gehäuseteil und nicht an der Auswurfklappe die Rundballenpresse konstruktiv einfacher ausgestaltet ist, da die Bewegung bzw. Einstellung der Halterolle nicht zusätzlich mit der Bewegung bzw. Einstellung der Auswurfklappe koordiniert werden muss und/oder eine Belastung der Bauteile der Auswurfklappe vermieden wird. Darüber hinaus begrenzt, insbesondere beim Öffnen der Auswurfklappe und/oder Auswerfen des Rundballens durch die Auswurföffnung, nicht das begrenzende Pressmittel, also endseitigen Pressmittel, des Gehäuseteils die Auswurföffnung, sondern die aus ihrer Ruhestellung in die Arbeitsstellung verlagerte Halterolle, sodass diese an dem aus der Presskammer ausrollenden, insbesondere umwickelten, Rundballen anliegt. Ausserdem kann die Halterolle auch als Entladerampe eingesetzt werden. Insgesamt kann der Rundballen dadurch einfacher ausgeladen und gleichzeitig eine Beschädigung des Rundballens beim Entladen vermieden werden.

In Ausgestaltung der Erfindung umfasst die Rundballenpresse eine zweite Stelleinrichtung und die Halterolle ist mittels der zweiten Stelleinrichtung zwischen der Ruhestellung und der Arbeitsstellung verstellbar, insbesondere einstellbar und/oder schwenkbar bzw. verschwenkbar und/oder verlagerbar gelagert. Die zweite Stelleinrichtung kann einen ersten und/oder zweiten Schwenkhebel und/oder einen ersten und/oder zweiten Aktuator umfassen. Die Halterolle kann frei drehbar am ersten und/oder zweiten Schwenkhebel und/oder dem ersten und/oder dem zweiten Aktuator gelagert sein. Die Halterolle kann insbesondere zwischen dem ersten und zweiten Schwenkhebel oder zwischen dem ersten und zweiten Aktuator frei drehbar gelagert sein. Die Halterolle kann mittels eines Halterollenlagers frei drehbar gelagert sein, insbesondere frei drehbar am ersten und zweiten Schwenkhebel oder dem ersten und/oder dem zweiten Aktuator gelagert sein. Der erste und/oder zweite Schwenkhebel können ebenfalls um eine Achse schwenkbar gelagert sein, sodass die Halterolle mittels des ersten und/oder zweiten Schwenkhebels zwischen der Ruhestellung und Arbeitsstellung verstellbar ist. Der erste und/oder zweite Schwenkhebel können aber auch jeweils eines oder mehrere Führungselemente umfassen. Der erste Schwenkhebel kann mittels des/der Führungselemente in einer ersten Führungsschiene führbar sein und/oder der zweite Schwenkhebel kann mittels des/der Führungselemente in einer zweiten Führungsschiene führbar sein. Die Schwenkverstellung kann über ein Hebelgestänge erfolgen. Der erste Aktuator kann mit dem ersten Schwenkhebel verbunden sein und/oder schwenkbar sein und/oder der zweite Aktuator kann mit dem zweiten Schwenkhebel verbunden sein und/oder schwenkbar sein. Der erste und/oder zweite Aktuator können als Hubzylinder oder Schwenkzylinder ausgebildet sein. Der Hubzylinder oder Schwenkzylinder kann beispielsweise elektrisch, mechanisch oder pneumatisch betätigbar sein, insbesondere als hydraulischer oder pneumatischer Hubzylinder oder Schwenkzylinder ausgebildet sein. Der erste und/oder zweite Aktuator können auch als Elektromotor, beispielsweise Spindelmotor oder Stellmotor, ausgebildet sein. Auch eine entsprechende Anordnung mit einem Seilzug ist denkbar, um die Betätigung rein mechanisch zu gestalten. Die Halterolle kann mittels der zweiten Stelleinrichtung derart verstellbar, insbesondere einstellbar und/oder verlagerbar und/oder schwenkbar oder abkoppelbar sein, dass die Halterolle in der Arbeitsstellung eine die Auswurföffnung begrenzende Position einnimmt, also insbesondere die Abmessung der Auswurföffnung in der Arbeitsstellung verkleinerbar ist. Die zweite Stelleinrichtung kann am Rahmen und/oder am Fahrgestell und/oder an der Entladerampe und/oder am Gehäuseteil angeordnet, bevorzugt befestigt und/oder schwenkbar gelagert sein. Die Halterolle kann mittels der zweite Stelleinrichtung kann am Rahmen und/oder am Fahrgestell und/oder an der Entladerampe und/oder am Gehäuseteil angeordnet, bevorzugt befestigt und/oder schwenkbar gelagert sein. Vorteilhafterweise ermöglicht dies eine konstruktiv einfache Ausgestaltung der Rundballenpresse. Ausserdem kann die zweite Stelleinrichtung vorteilhafterweise auch als Entladerampe verwendet werden.

In Ausgestaltung der Erfindung ist die Halterolle in Abhängigkeit von einer Abmessung der Auswurföffnung und/oder vom Öffnungswinkel der Auswurfklappe zwischen der Ruhelage und der Arbeitsstellung verstellbar, insbesondere einstellbar und/oder verlagerbar und/oder verschwenkbar oder abkoppelbar. Vorteilhafterweise kann dadurch vermieden werden, dass der Rundballen beim Auswerfen mit einem Pressmittel in Berührung kommt und insbesondere das Umwicklungsmaterial beschädigt oder zerstört wird. Ebenso kann der Rundballen sicher entladen werden.

In Ausgestaltung der Erfindung ist die Halterolle von einem die Abmessung der Auswurföffnung erfassenden Abstandssensor und/oder den Öffnungswinkel der Auswurfklappe erfassenden Winkelsensor gesteuert ist. Der Vorteil dieser Massnahme ist, dass die Steuerung der Halterolle in Abhängigkeit von einer Abmessung der Auswurföffnung und/oder vom Öffnungswinkel der Auswurfklappe auf einfache Art und Weise konstruktiv gelöst werden kann.

In Ausgestaltung der Erfindung ist das unmittelbar an die Auswurföffnung angrenzende Pressmittel der Auswurfklappe, insbesondere das die Auswurföffnung begrenzende Pressmittel der Auswurfklappe, von einer Antriebsanordnung der Rundballenpresse abkoppelbar ist, sodass das an die Auswurföffnung angrenzende Pressmittel der Auswurfklappe frei drehbar gelagert ist. Das an die Auswurföffnung angrenzende Pressmittel kann mittels einer Schaltkupplung von der Antriebsanordnung abkoppelbar sein. Die Schaltkupplung kann in Abhängigkeit von einer Abmessung der Auswurföffnung und/oder von einem den Öffnungswinkel der Auswurfklappe abkoppelbar sein. Vorteilhafterweise kann dadurch, dass die Halterolle und das frei drehbar gelagerte unmittelbar an die Auswurföffnung angrenzende Pressmittel die Auswurföffnung begrenzen, eine Beschädigung des Rundballens, insbesondere des mit Umwicklungsmaterials umwickelten Rundballens, ausgeschlossen werden.

In Ausgestaltung der Erfindung weist die Rundballenpresse einen Neigungssensor zur Messung einer Neigung der Rundballenpresse und/oder ein Kommunikationsmodul zum Empfang einer Standortinformation der Rundballenpresse auf. Ausserdem sind die erste und/oder zweite Stelleinrichtung in Abhängigkeit von der Neigung und/oder der Standortinformation der Rundballenpresse betreibbar. Mit dem Neigungssensor kann die Neigung gemessen werden, insbesondere ein Neigungswinkel der Rundballenpresse in Bezug zur Lotrichtung oder eine Änderung eines Neigungswinkels und/oder der Neigungswinkel in Bezug zur Gravitation der Erde. Die Standortinformation der Rundballenpresse kann die eigene Position der Rundballenpresse auf der Erdoberfläche oder in einem geeigneten geometrischen Bezugssystem sein. Die Standortinformation kann beispielsweise mittels des globalen Positionsbestimmungssystem (engl. Global Positioning System=GPS) ermittelt werden und mittels des Kommunikationsmoduls bereitgestellt bzw. empfangen werden. Das Kommunikationsmodul kann ein GPS-Gerät und/oder ein WLAN-Gerät und/oder ein Tablet und/oder Smartphone sein. Die Neigung und/oder die Standortinformation geben Auskunft darüber, ob sich die Rundballenpresse, insbesondere der aktuelle Arbeitsort der Rundballenpresse, in unebenem und/oder hügeligem Gelände befindet. Vorteilhafterweise können somit die erste und/oder zweite Stelleinrichtung in Abhängigkeit von der Neigung und/oder der Standortinformation der Rundballenpresse, also in Abhängigkeit vom aktuellen Arbeitsort, verstellt, insbesondere eingestellt und/oder verändert werden.

Die Erfindung betrifft weiter ein Verfahren zum Betrieb einer landwirtschaftlichen Rundballenpresse, insbesondere einer Rundballenpresse nach einem der Ansprüche 1 bis 7. Die Rundballenpresse umfasst ein Gehäuse, wobei das Gehäuse einen Gehäuseteil und eine an diesem Gehäuseteil um eine Lagerachse schwenkbar gelagerte Auswurfklappe aufweist. Auf dem Gehäuseteil und der Auswurfklappe verteilte angetriebene Pressmittel, begrenzen eine Presskammer umfangsseitig. Die Auswurfklappe wird mittels einer ersten Stelleinrichtung derart verstellt, dass beim Öffnen der Auswurfklappe eine Auswurföffnung zwischen dem Gehäuseteil und der Auswurfklappe ausgebildet wird und eine Abmessung der Auswurföffnung verstellt wird. Das Gehäuseteil umfasst eine Halterolle, und die Halterolle wird zwischen einer Ruhestellung und einer Arbeitsstellung, in der die Halterolle eine die Auswurföffnung begrenzende Position einnimmt, verstellt. Das erfindungsgemässe Verfahren weist die oben beschriebenen Vorteile der erfindungsgemässen Rundballenpresse auf und kann mit dieser durchgeführt werden. Im Weiteren kann die erfindungsgemässe Rundballenpresse bei der Durchführung des erfindungsgemässen Verfahrens verwendet werden.

Die Rundballenpresse kann ausserdem eine Steuereinrichtung aufweisen, die betreibbar ist, die Rundballenpresse, insbesondere die erste und/oder zweite Stelleinrichtung, bevorzugt den ersten und/oder zweiten Aktuator, derart zu steuern und/oder zu regeln, bevorzugt zu verstellen, besonders bevorzugt einzustellen und/oder zu verändern, dass die Ruhestellung und der Arbeitsstellung der Halterolle einstellbar und/oder die Halterolle zwischen der Ruhestellung und der Arbeitsstellung verstellbar ist. Die Steuereinheit kann auch die vom Abstandssensor und/oder Winkelsensor erzeugten Signale empfangen und/oder verarbeiten und/oder mittels der Signale die erste und/oder zweite Stelleinrichtung und/oder den ersten und/oder zweiten Aktuator steuern und/oder regeln. Ausserdem kann mit der Steuereinheit die Rundballenpresse steuerbar und/oder regelbar sein. Die Steuereinheit (engl. ECU = electronic control unit oder ECM = electronic control module) kann ein elektronisches Modul und/oder ein eingebettetes System sein. Die Steuereinheit kann an der Rundballenpresse oder an einem Zugfahrzeug, durch welches die Rundballenpresse gezogen wird, bereits vorgesehen sein. Die Steuereinheit kann auch auf die Rundballenpresse und das Zugfahrzeug verteilt sein. Die Steuereinheit und die Rundballenpresse, insbesondere die erste und/oder zweite Stelleinrichtung und/oder den ersten und/oder zweiten Aktuator, können mittels eines Kabels oder Drahts oder aber drahtlos, also beispielsweise mittels Funk, miteinander verbunden werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Seitenansicht eines ersten Ausführungsbeispiel einer erfindungsgemässen Rundballenpresse, und
- Fig. 2: eine schematische Draufsicht der Halterolle mit zweiter Stelleinrichtung in Ruhestellung, und
- Fig. 3: eine schematische Draufsicht der Halterolle mit zweiter Stelleinrichtung in Arbeitsstellung, und
- Fig. 4: eine schematische Seitenansicht eines zweiten Ausführungsbeispiel der erfindungsgemässen Rundballenpresse, und
- Fig. 5: eine schematische Seitenansicht eines dritten Ausführungsbeispiels der erfindungsgemässen Rundballenpresse, und
- Fig. 6: eine schematische Seitenansicht eines vierten Ausführungsbeispiels der erfindungsgemässen Rundballenpresse.

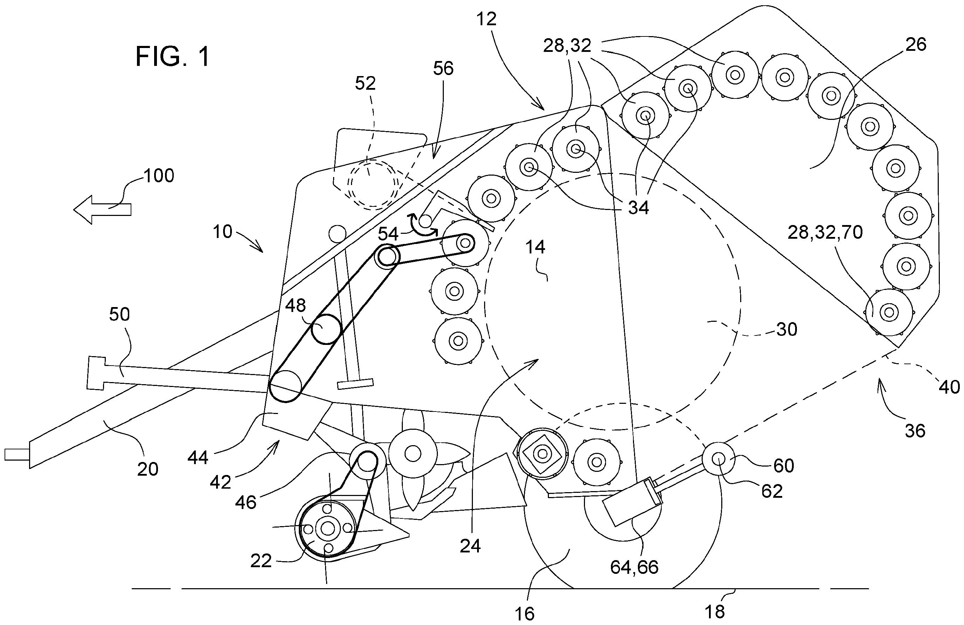

Figur 1 zeigt eine schematische Darstellung eines ersten Ausführungsbeispiels der erfindungsgemässen Rundballenpresse 10. Die in Figur 1 schematisch dargestellte Rundballenpresse 10 umfasst ein Gehäuse 12 mit einem Gehäuseteil 14. Das Gehäuse 12, insbesondere der Gehäuseteil 14, stützen sich mittels eines Fahrgestells (nicht gezeigt), hier im Speziellen mit Rädern 16 auf einem Boden 18 ab. Die Rundballenpresse kann mittels einer Deichsel 20 an ein nicht gezeigtes Zugfahrzeug, z. B. einen Traktor oder Ackerschlepper, anschließbar sein.

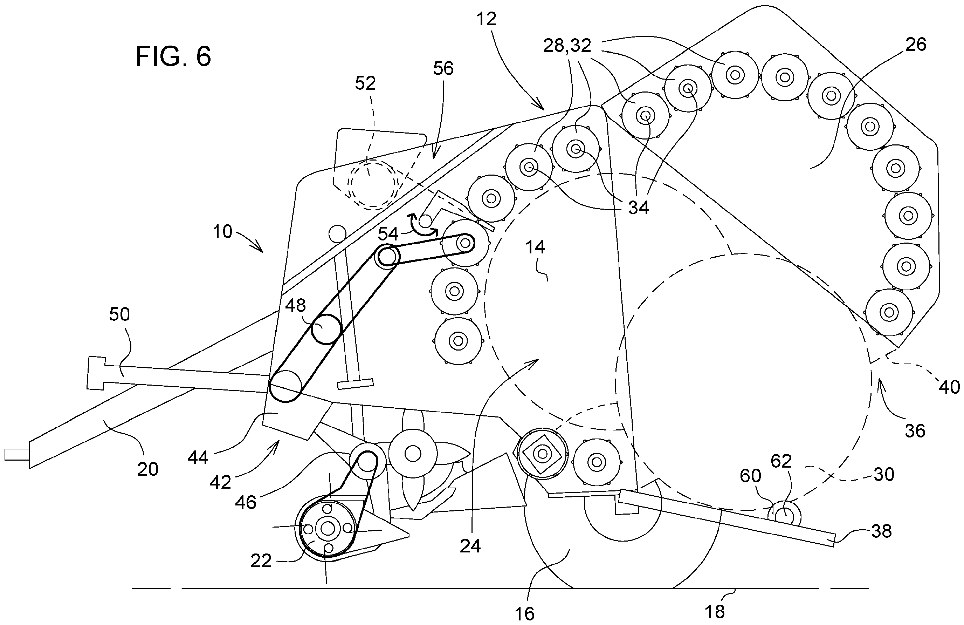

An der in Vorwärtsfahrtrichtung 100 vorderen unteren Seite des Gehäuseteils 14 befindet sich in bekannter Weise eine Aufnahme- und Zuführeinrichtung 22 für Erntegut. Das Gehäuse 12 weist weiter eine am Gehäuseteil 14 um eine Lagerachse schwenkbar gelagerte Auswurfklappe 26 auf, wobei sich im Speziellen am rückwärtigen oberen Eckbereich des Gehäuseteils 14 ein Lager für die schwenkbar gelagerte Auswurfklappe 26 befindet. Auf dem Gehäuseteil 14 und der Auswurfklappe 26 sind antreibbare Pressmittel 28 verteilt, die eine Presskammer 24 umfangsseitig begrenzen. Mittels der Pressmittel 28 ist eine rotationserzeugende oder rotationserhaltende Eingriffswirkung auf einen in der Presskammer 24 befindlichen Rundballen 30 erzeugbar. Somit bildet das Gehäuseteil 14 einen vorderen Teil der Presskammer 24 und die Auswurfklappe 26 einen hinteren Teil der Presskammer 24 aus. Die in den Figuren 1, 4 bis 5 gezeigten Rundballenpressen können eine Entladerampe (siehe Figur 6, Bezugszeichen 38) umfassen.

Die Rundballenpresse 10, mit größenunveränderlicher Presskammer 24 ausgebildet, enthält eine Vielzahl zueinander parallel verlaufender Pressmittel 28 zum Pressen von Erntegut in Form von Pressrollen 32 (exemplarisch wurden hier nur einige wenige Pressrollen 32 mit dem Bezugszeichen "32" versehen), deren Rotationsachsen 34 bei geschlossener Auswurfklappe 26 auf einem Kreisbogen gelegen sind, und von denen wenigstens einige angetrieben sind.

Die Auswurfklappe 26 kann mittels einer ersten Stelleinrichtung (nicht gezeigt) betätigt werden (geöffnet und geschlossen werden). Dabei ist die Auswurfklappe 26 mittels der Stelleinrichtung derart schwenkbar, dass beim Öffnen der Auswurfklappe 26 eine Auswurföffnung 36 zwischen dem Gehäuseteil 14 und der Auswurfklappe 26 ausbildbar ist. Durch die Auswurföffnung 36 kann ein von der Rundballenpresse 10 gepresster Rundballen 30 abgesetzt bzw. entladen oder ausgeworfen werden. Der Rundballen 30 bewegt sich dabei in Richtung der Auswurföffnung 36 und rollt für gewöhnlich über die Entladerampe 38 auf den Boden 18. Darüber hinaus ist die Auswurfklappe 26 mittels der ersten Stelleinrichtung derart schwenkbar, dass eine Abmessung 40 der Auswurföffnung, bevorzugt ein Durchmesser der Auswurföffnung 36 und/oder ein Abstand zwischen dem Gehäuseteil 14 und der Auswurfklappe 26, veränderbar ist.

Die Rundballenpresse 10 verfügt ferner über eine Antriebsanordnung 42 mit einer Getriebeanordnung 44, einem ersten Antriebsstrang 46 und einem zweiten Antriebsstrang 48. Eine Antriebswelle 50 ist mit einer Zapfwelle (nicht gezeigt) des Zugfahrzeugs oder Schleppers verbindbar und dient als Antrieb für die Antriebsanordnung 42. Der erste Antriebsstrang 46 steht über einen ersten Abtrieb (nicht gezeigt) und der zweite Antriebsstrang 48 über einen zweiten Abtrieb (nicht gezeigt) der Getriebeanordnung 44 mit dieser in Antriebsverbindung. Der erste Antriebsstrang 46 treibt die Aufnahme- und Zuführeinrichtung 22 an, wobei der zweite Antriebsstrang 48 zum Antreiben der Pressmittel 28 bzw. der Pressrollen 32 vorgesehen ist. Die Antriebsstränge 46, 48 umfassen alle Antriebskomponenten, die in bekannter Weise in Rundballenpressen zum Antreiben der Aufnahme- und Zuführeinrichtung 22 bzw. zum Antreiben der Pressmittel 28 angeordnet sind und antriebsseitig mit dem ersten Abtrieb bzw. dem zweiten Abtrieb der Getriebeanordnung 44 verbunden sind.

Ferner umfasst die Rundballenpresse 10 eine Umwicklungseinrichtung 56, die mit einer Netz- und/oder Folienrolle 52 als Umwicklungsmaterial bestückt ist. Die Umwicklungseinrichtung 56 umfasst eine Wickelmaterialzuführung 54, die das Umwicklungsmaterial von der Netz- bzw. Folienrolle 52 in den Presskammer 24 führt. An Stelle einer Umwicklungseinrichtung 56 kann auch eine Bindeeinrichtung (nicht gezeigt) mit Bindegarn, ebenfalls in bekannter Weise, zum Einsatz kommen.

Während eines Pressvorgangs werden der erste und der zweite Antriebsstrang 46, 48 über die Getriebeanordnung 44 bzw. über den Antrieb und den Abtrieben parallel angetrieben, so dass die Aufnahme- und Zuführeinrichtung 22 als auch die Pressmittel 28, 32 zeitgleich mit konstantem Drehzahlverhältnis zueinander in Betrieb gehalten werden. Nachdem die Erntegutaufnahme und Bildung des Rundballens 30 durch die Pressrollen 32, abgeschlossen ist, wird die Fahrt über den Boden 18 unterbrochen, da die Rundballenpresse 10 mit dem Rundballen 30 gefüllt ist und kein weiteres Erntegut mehr in die Presskammer 24 aufgenommen werden soll bzw. kann. Zu dieser Zeit wird auch die Umwicklungseinrichtung 56 aktiviert, die einen Wickel- bzw. Bindevorgang eingeleitet. Dabei wird durch eine anhaltende Drehung des sich in der Presskammer 24 befindlichen Rundballens 30 das Umwicklungsmaterial um den Rundballen 30 gewickelt. Nachdem ein Wickelvorgang abgeschlossen ist geht der Pressvorgang in den Entladevorgang über und der Rundballen 30 wird während durch Öffnen der Auslassklappe 26 über die Auswurföffnung 36 und die Entladerampe 38 auf den Boden 18 abgeladen.

Die wesentlichen Probleme der bekannte Rundballenpressen 10 beim Entladen von Rundballen 30, insbesondere von mit Umwicklungsmaterial umwickelten Rundballen 30 sind die eingangs genannten Probleme bzgl. der Beschädigung des Umwicklungsmaterials und die konstruktiv und/oder verfahrenstechnisch zu komplizierte Ausgestaltung der Rundballenpresse 10.

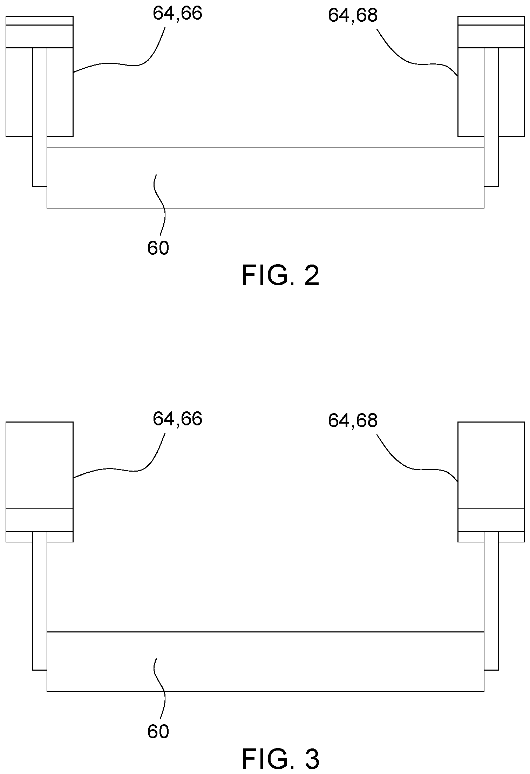

Das Gehäuseteil 14 der erfindungsgemässe Rundballenpresse 10 umfasst eine Halterolle 60. Die Halterolle 60 ist zwischen einer Ruhestellung (siehe Figur 2) und einer Arbeitsstellung verstellbar angeordnet (siehe beispielsweise Figuren 1 und 3). In der Arbeitsstellung nimmt die Halterolle 60 eine die Auswurföffnung 36, bevorzugt für den mit Umwicklungsmaterial umwickelten Rundballen 30, begrenzende Position ein. Wesentlich für die Erfindung ist, dass aufgrund der erfindungsgemässen Ausgestaltung der Rundballenpresse, diese konstruktiv einfacher ausgestaltet ist und eine Beschädigung des Rundballens, insbesondere des mit Umwicklungsmaterial umwickelten Rundballens, beim Entladen vermieden werden kann. Aufgrund der frei drehbaren Lagerung kann die Halterolle 60 im Wesentlichen schlupffrei vom Rundballen 30 mitgedreht werden, wodurch beispielsweise zusätzliche Zugspannungen am vom Umwicklungsmaterial umwickelten Rundballen 30 vermieden wird.

Figur 1 zeigt eine Rundballenpresse, bei der die Halterolle 60 eine frei drehbar gelagerte Rolle ist, die an einem Halterollenlager 62 frei drehbar gelagert ist. Die Rundballenpresse 10 umfasst eine zweite Stelleinrichtung 64, mittels der die Halterolle 60 zwischen der Ruhestellung und der Arbeitsstellung verstellbar ist. Die Halterolle 60 ist mittels des Halterollenlagers 62 an der zweiten Stelleinrichtung 64 frei drehbar gelagert. Die zweite Stelleinrichtung 64 umfasst einen ersten Aktuator 66, der als Hubzylinder ausgebildet ist. Der Hubzylinder kann beispielsweise elektrisch, mechanisch oder pneumatisch betätigbar sein. Die Halterolle 60 kann in Abhängigkeit von einer Abmessung 40 der Auswurföffnung 36 und/oder vom Öffnungswinkel der Auswurfklappe 26 zwischen der Ruhelage und der Arbeitsstellung verstellbar sein. Dazu kann die Halterolle 60 von einem die Abmessung 40 der Auswurföffnung 36 erfassenden Abstandssensor (nicht gezeigt) und/oder den Öffnungswinkel der Auswurfklappe 26 erfassenden Winkelsensor (nicht gezeigt) gesteuert sein. Zusätzlich kann das die Auswurföffnung 36 begrenzende Pressmittel 28, 32, 70 der Auswurfklappe 26 von der Antriebsanordnung 42 abkoppelbar sein, beispielsweise mittels einer Schaltkupplung (nicht gezeigt), sodass das die Auswurföffnung 36 begrenzende Pressmittel 28, 32, 70 bzw. das unmittelbar an die Auswurföffnung angrenzende Pressmittel 28, 32, 70 frei drehbar gelagert ist.

Die Figuren 2 und 3 zeigen eine schematische Draufsicht der Halterolle 60 und der zweiten Stelleinrichtung 64 in der Ruhestellung (siehe Figur 2) und der Arbeitsstellung (siehe Figur 3). Die in den Figuren 2 und 3 gezeigten Halterollen 60 und der zweiten Stelleinrichtungen 64 entsprechen im Wesentlichen der in Figur 1 Halterolle 60 und der zweiten Stelleinrichtung 64, sodass im Folgenden lediglich auf die Unterschiede eingegangen wird. Die zweite Stelleinrichtung 64 umfasst den ersten Aktuator 66 und einen zweiten Aktuator 68. Der zweite Aktuator 68 ist ebenfalls als Hubzylinder ausgebildet, der beispielsweise elektrische, mechanische oder pneumatische betätigbar sein kann.

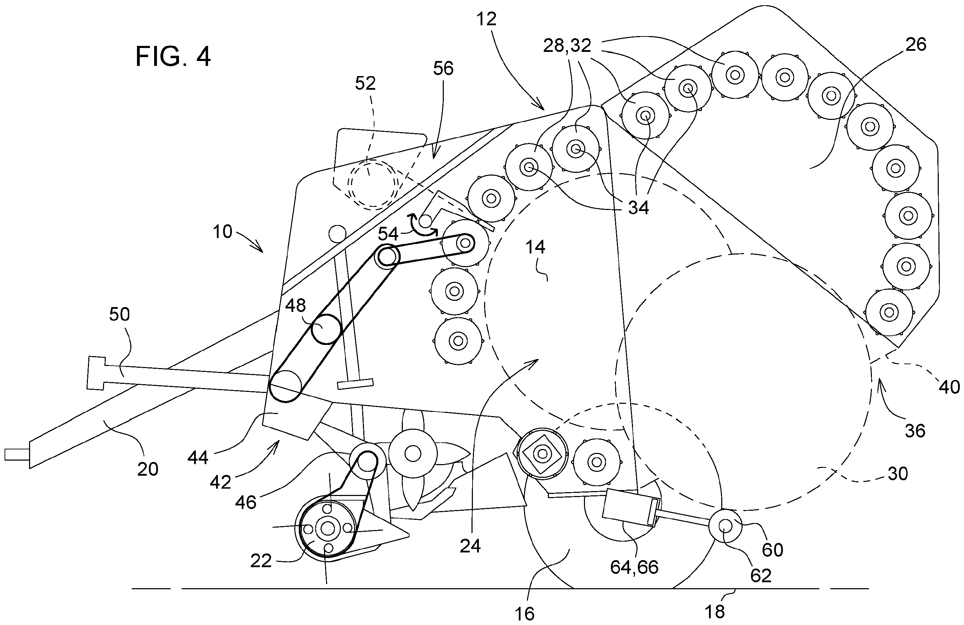

Figur 4 zeigt eine schematische Seitenansicht eines zweiten Ausführungsbeispiels der erfindungsgemässen Rundballenpresse 10. Die in Figur 4 gezeigte Rundballenpresse 10 entspricht im Wesentlichen der in Figur 1 gezeigten Rundballenpresse 10 und die in Figur 4 gezeigte Halterolle 60 und die zweite Stelleinrichtung 64 entsprechen der in den Figuren 2 und 3 gezeigten Halterolle 60 und der zweiten Stelleinrichtung 64, sodass im Folgenden lediglich auf die Unterschiede eingegangen wird. Die zweite Stelleinrichtung 64 ist schwenkbar an der Rundballenpresse 10, hier dem Fahrgestell, gelagert, sodass die zweite Stelleinrichtung 64 in Verbindung mit der Halterolle 60 den auszuwerfende Rundballen 30 halten und/oder abrollen kann. Dadurch kann die zweite Stelleinrichtung 64 in Verbindung mit der Halterolle 60 vorteilhafterweise als Entladerampe 38 eingesetzt werden.

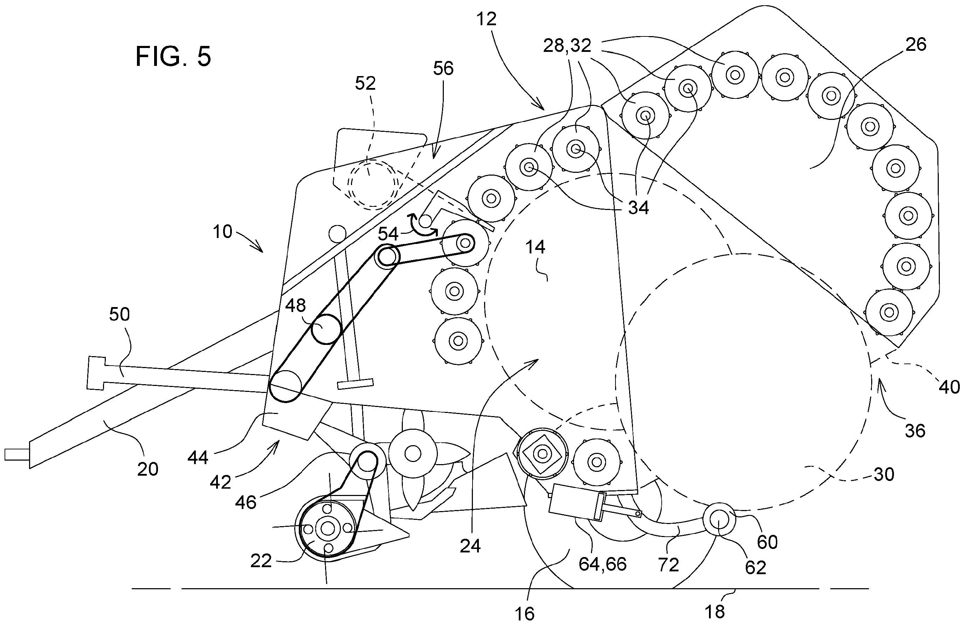

Figur 5 zeigt eine schematische Seitenansicht eines dritten Ausführungsbeispiels der erfindungsgemässen Rundballenpresse 10. Die in Figur 5 gezeigte Rundballenpresse 10 entspricht im Wesentlichen der in Figur 1 und 4 gezeigten Rundballenpresse 10 und die in Figur 5 gezeigte Halterolle 60 und die zweite Stelleinrichtung 64 entsprechen der in den Figuren 2 und 3 gezeigten Halterolle 60 und der zweiten Stelleinrichtung 64, sodass im Folgenden lediglich auf die Unterschiede eingegangen wird. Die Halterolle 60 ist frei drehbar am ersten Schwenkhebel 72 gelagert. Der erste Schwenkhebel 72 ist um eine Achse schwenkbar gelagert, sodass die Halterolle 60 mittels des ersten Schwenkhebels 72 zwischen der Ruhestellung und Arbeitsstellung verschwenkbar ist. Der erste Aktuator 66 ist als Schwenkzylinder ausgebildet. Der Schwenkzylinder ist mit dem ersten Schwenkhebel 72 verbunden. Der erste Schwenkhebel 72 ist mittels des ersten Aktuators betätigbar und/oder verschwenkbar. Ebenso kann aber auch ein zweiter Schwenkhebel und/oder ein zweiter Aktuator vorgesehen sein. Die Halterolle 60 kann frei drehbar zwischen dem ersten und zweiten Schwenkhebel 72 gelagert sein.

Der zweite Aktuator 68 kann mit dem zweiten Schwenkhebel verbunden sein. Der zweite Schwenkhebel kann mittels des zweiten Aktuators 68 betätigbar und/oder verschwenkbar.

Figur 6 zeigt eine schematische Seitenansicht eines vierten Ausführungsbeispiels der erfindungsgemässen Rundballenpresse 10. Die in Figur 6 gezeigte Rundballenpresse 10 entspricht im Wesentlichen der in Figur 1 und 4 bis 5 gezeigten Rundballenpresse 10 und die in Figur 6 gezeigte Halterolle 60 und die zweite Stelleinrichtung 64 entsprechen der in den Figuren 2 und 3 gezeigten Halterolle 60 und der zweiten Stelleinrichtung 64, sodass im Folgenden lediglich auf die Unterschiede eingegangen wird. Die Halterolle 60 ist frei drehbar an der Entladerampe 38 gelagert. Vorteilhafterweise kann so die Entladerampe 38 als Lager für die Halterolle 60 verwendet werden und es kann auf eine zweite Stellreinrichtung 64 verzichtet werden.

## Patentansprüche

1. Rundballenpresse mit einem Gehäuse (12), das einen Gehäuseteil (14) und eine an diesem Gehäuseteil (14) um eine Lagerachse schwenkbar gelagerte Auswurfklappe (26) aufweist, und auf dem Gehäuseteil (14) und der Auswurfklappe (26) verteilte antreibbare Pressmittel (28,32), die eine Presskammer (24) umfangsseitig begrenzen, wobei die Auswurfklappe (26) mittels einer ersten Stelleinrichtung derart verstellbar ist, dass beim Öffnen der Auswurfklappe (26) eine Auswurföffnung (36) zwischen dem Gehäuseteil (14) und der Auswurfklappe (26) ausbildbar und eine Abmessung (40) der Auswurföffnung (36) verstellbar ist,
**dadurch gekennzeichnet, dass**
das Gehäuseteil (14) eine Halterolle (60) umfasst, und die Halterolle (60) zwischen einer Ruhestellung und einer Arbeitsstellung, in der die Halterolle (60) eine die Auswurföffnung (36) begrenzende Position einnimmt, verstellbar angeordnet ist.

2. Rundballenpresse nach Anspruch 1, **dadurch gekennzeichnet, dass** die Rundballenpresse (10) eine zweite Stelleinrichtung (64) umfasst, und die Halterolle (60) mittels der zweiten Stelleinrichtung (64) zwischen der Ruhestellung und der Arbeitsstellung verstellbar ist.

3. Rundballenpresse nach mindestens einem der vorangehenden Ansprüche, **dadurch gekennzeichnet, dass** die Halterolle (60) in Abhängigkeit von einer Abmessung (40) der Auswurföffnung (36) und/oder vom Öffnungswinkel der Auswurfklappe (26) zwischen der Ruhelage und der Arbeitsstellung verstellbar ist.

4. Rundballenpresse nach mindestens einem der vorangehenden Ansprüche, **dadurch gekennzeichnet, dass** die Halterolle (60) von einem die Abmessung (40) der Auswurföffnung (36) erfassenden Abstandssensor und/oder den Öffnungswinkel der Auswurfklappe (26) erfassenden Winkelsensor gesteuert ist.

5. Rundballenpresse nach mindestens einem der vorangehenden Ansprüche, **dadurch gekennzeichnet, dass** das unmittelbar an die Auswurföffnung (36) angrenzende Pressmittel (28, 32, 70) der Auswurfklappe (26) von einer Antriebsanordnung der Rundballenpresse (10) abkoppelbar ist.

6. Rundballenpresse nach mindestens einem der vorangehenden Ansprüche, **dadurch gekennzeichnet, dass** die Rundballenpresse (10) einen Neigungssensor zur Messung einer Neigung der Rundballenpresse (10) und/oder ein Kommunikationsmodul zum Empfang einer Standortinformation der Rundballenpresse (10) aufweist.

7. Rundballenpresse nach mindestens einem der vorangehenden Ansprüche, **dadurch gekennzeichnet, dass** die erste und/oder zweite Stelleinrichtung (64) in Abhängigkeit von der Neigung und/oder der Standortinformation der Rundballenpresse (10) betreibbar ist.

8. Verfahren zum Betrieb einer Rundballenpresse (10) mit einem Gehäuse (12), wobei das Gehäuse (12) einen Gehäuseteil (14) und eine an diesem Gehäuseteil (14) um eine Lagerachse schwenkbar gelagerte Auswurfklappe (26) aufweist, und auf dem Gehäuseteil (14) und der Auswurfklappe (26) verteilte angetriebene Pressmittel (28, 32), die eine Presskammer (24) umfangsseitig begrenzen, wobei die Auswurfklappe (26) mittels einer ersten Stelleinrichtung derart verstellt wird, dass beim Öffnen der Auswurfklappe (26) eine Auswurföffnung (36) zwischen dem Gehäuseteil (14) und der Auswurfklappe (26) ausgebildet wird und eine Abmessung (40) der Auswurföffnung (36) verstellt wird,
**dadurch gekennzeichnet, dass**
das Gehäuseteil (14) eine Halterolle (60) umfasst, und die Halterolle (60) zwischen einer Ruhestellung und einer Arbeitsstellung, in der die Halterolle (60) eine die Auswurföffnung (36) begrenzende Position einnimmt, verstellt wird.

## Claims

1. Roundbaler having a housing (12) which has a housing part (14) and an ejection flap (26) which is pivotably mounted on this housing part (14) about a bearing axis, and drivable pressing means (28, 32) which are allocated to the housing part (14) and the ejection flap (26) and which define a pressing chamber (24) on the peripheral side, wherein the ejection flap (26) is adjustable by means of a first adjusting apparatus such that, when the ejection flap (26) is opened, an ejection opening (36) is able to be formed between the housing part (14) and the ejection flap (26) and a dimension (40) of the ejection opening (36) is adjustable,
**characterized in that**
the housing part (14) comprises a retaining roller (60) and the retaining roller (60) is arranged so as to be adjustable between a resting position and a working position in which the retaining roller (60) adopts a position defining the ejection opening (36) .

2. Roundbaler according to Claim 1, **characterized in that** the roundbaler (10) comprises a second adjusting apparatus (64) and the retaining roller (60) is adjustable by means of the second adjusting apparatus (64) between the resting position and the working position.

3. Roundbaler according to at least one of the preceding claims, **characterized in that** the retaining roller (60) is adjustable between the resting position and the working position as a function of a dimension (40) of the ejection opening (36) and/or the opening angle of the ejection flap (26) .

4. Roundbaler according to at least one of the preceding claims, **characterized in that** the retaining roller (60) is controlled by a distance sensor detecting the dimension (40) of the ejection opening (36) and/or an angle sensor detecting the opening angle of the ejection flap (26).

5. Roundbaler according to at least one of the preceding claims, **characterized in that** the pressing means (28, 32, 70) of the ejection flap (26) directly adjacent to the ejection opening (36) is uncouplable from a drive arrangement of the roundbaler (10).

6. Roundbaler according to at least one of the preceding claims, **characterized in that** the roundbaler (10) has an inclination sensor for measuring an inclination of the roundbaler (10) and/or a communication module for receiving location information of the roundbaler (10).

7. Roundbaler according to at least one of the preceding claims, **characterized in that** the first and/or second adjusting apparatus (64) is able to be operated as a function of the inclination and/or the location information of the roundbaler (10).

8. Method for operating a roundbaler (10) having a housing (12), wherein the housing (12) has a housing part (14) and an ejection flap (26) which is pivotably mounted on this housing part (14) about a bearing axis, and driven pressing means (28, 32) which are allocated to the housing part (14) and the ejection flap (26) and which define a pressing chamber (24) on the peripheral side, wherein the ejection flap (26) is adjusted by means of a first adjusting apparatus such that, when the ejection flap (26) is opened, an ejection opening (36) is formed between the housing part (14) and the ejection flap (26) and a dimension (40) of the ejection opening (36) is adjusted,
**characterized in that**
the housing part (14) comprises a retaining roller (60) and the retaining roller (60) is adjusted between a resting position and a working position in which the retaining roller (60) adopts a position defining the ejection opening (36).

## Revendications

1. Presse à balles rondes avec un boîtier (12), qui présente une partie de boîtier (14) et un clapet d'éjection (26) monté sur cette partie de boîtier (14) de manière pivotante autour d'un axe de palier, et des moyens de pression (28, 32) pouvant être entraînés, répartis sur la partie de boîtier (14) et le clapet d'éjection (26), qui délimitent une chambre de pression (24) sur la périphérie, le clapet d'éjection (26) étant réglable au moyen d'un premier dispositif de réglage de telle sorte que, lors de l'ouverture du clapet d'éjection (26), une ouverture d'éjection (36) peut être formée entre la partie de boîtier (14) et le clapet d'éjection (26) et une dimension (40) de l'ouverture d'éjection (36) est réglable,
**caractérisée en ce que**
la partie de boîtier (14) comprend un rouleau de maintien (60), et le rouleau de maintien (60) est agencé de manière réglable entre une position de repos et une position de travail dans laquelle le rouleau de maintien (60) occupe une position délimitant l'ouverture d'éjection (36).

2. Presse à balles rondes selon la revendication 1, **caractérisée en ce que** la presse à balles rondes (10) comprend un deuxième dispositif de réglage (64), et le rouleau de maintien (60) est réglable entre la position de repos et la position de travail au moyen du deuxième dispositif de réglage (64).

3. Presse à balles rondes selon au moins l'une quelconque des revendications précédentes, **caractérisée en ce que** le rouleau de maintien (60) est réglable entre la position de repos et la position de travail en fonction d'une dimension (40) de l'ouverture d'éjection (36) et/ou de l'angle d'ouverture du clapet d'éjection (26).

4. Presse à balles rondes selon au moins l'une quelconque des revendications précédentes, **caractérisée en ce que** le rouleau de maintien (60) est commandé par un capteur de distance détectant la dimension (40) de l'ouverture d'éjection (36) et/ou un capteur d'angle détectant l'angle d'ouverture du clapet d'éjection (26).

5. Presse à balles rondes selon au moins l'une quelconque des revendications précédentes, **caractérisée en ce que** le moyen de pression (28, 32, 70) du clapet d'éjection (26) directement adjacent à l'ouverture d'éjection (36) peut être désaccouplé d'un agencement d'entraînement de la presse à balles rondes (10).

6. Presse à balles rondes selon au moins l'une quelconque des revendications précédentes, **caractérisée en ce que** la presse à balles rondes (10) présente un capteur d'inclinaison pour mesurer une inclinaison de la presse à balles rondes (10) et/ou un module de communication pour recevoir une information de localisation de la presse à balles rondes (10).

7. Presse à balles rondes selon au moins l'une quelconque des revendications précédentes, **caractérisée en ce que** le premier et/ou le deuxième dispositif de réglage (64) peut être exploité en fonction de l'inclinaison et/ou de l'information de localisation de la presse à balles rondes (10).

8. Procédé d'exploitation d'une presse à balles rondes (10) avec un boîtier (12), le boîtier (12) présentant une partie de boîtier (14) et un clapet d'éjection (26) monté sur cette partie de boîtier (14) de manière pivotante autour d'un axe de palier, et des moyens de pression (28, 32) entraînés, répartis sur la partie de boîtier (14) et le clapet d'éjection (26), qui délimitent une chambre de pression (24) sur la périphérie, le clapet d'éjection (26) étant réglé au moyen d'un premier dispositif de réglage de telle sorte que, lors de l'ouverture du clapet d'éjection (26), une ouverture d'éjection (36) est formée entre la partie de boîtier (14) et le clapet d'éjection (26) et une dimension (40) de l'ouverture d'éjection (36) est réglée,
**caractérisé en ce que**
la partie de boîtier (14) comprend un rouleau de maintien (60), et le rouleau de maintien (60) est réglé entre une position de repos et une position de travail dans laquelle le rouleau de maintien (60) occupe une position délimitant l'ouverture d'éjection (36).
